(19) Europäisches Patentamt
European Patent Office
Office européen des brevets

(11) EP 2 009 538 A1

(12) EUROPÄISCHE PATENTANMELDUNG

(43) Veröffentlichungstag:
31.12.2008 Patentblatt 2009/01

(51) Int Cl.:
$G05F\ 1/46$ (2006.01) $G05F\ 3/20$ (2006.01)
$G11C\ 5/14$ (2006.01)

(21) Anmeldenummer: 08010093.6

(22) Anmeldetag: 03.06.2008

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(30) Priorität: 25.06.2007 DE 102007029526

(71) Anmelder: Sitronic Ges. Für Elektrotechnische Ausrüstung Mbh
& Co. Kg
71116 Gärtringen (DE)

(72) Erfinder: Zametzky, Klaus
91126 Schwabach (DE)

(74) Vertreter: Kohler Schmid Möbus
Patentanwälte
Ruppmannstrasse 27
70565 Stuttgart (DE)

(54) **Elektronisches Modul und Anordnung zur Signalübertragung damit**

(57) Die Erfindung betrifft ein elektronisches Modul für ein Kraftfahrzeug, insbesondere einen Gebläseregler (4") mit einem Steuereingang (S) für ein über eine Signalleitung (3) übertragenes, insbesondere pulsweitenmoduliertes Signal. Das elektronische Modul ist zur Erzeugung eines im Wesentlichen konstanten Potentials ($U_{bias}$, $U_{bias}$ - $U_{BE}$) an dem Steuereingang (S) ausgebildet, der bevorzugt als stromgesteuerter, niederohmiger Steuereingang ausgebildet ist. Die Erfindung betrifft auch eine Anordnung (1") zur Übertragung eines bevorzugt pulsweitenmodulierten Signals mit: einer Steuereinrichtung (2') zur Erzeugung des Signals, einer Signalleitung (3) zum Übertragen des Signals und einem elektronischen Modul wie oben beschrieben.

Fig. 2

EP 2 009 538 A1

**Beschreibung**

Die Erfindung betrifft ein elektronisches Modul für ein Kraftfahrzeug, insbesondere einen Gebläseregler, mit einem Steuereingang für ein über eine Signalleitung übertragenes, insbesondere pulsweitenmoduliertes Signal sowie eine Anordnung zur Übertragung des Signals mit einem solchen elektronischen Modul zum Empfangen des Signals.

Zur Übertragung analoger Steuergrößen von einer Steuereinrichtung als Sender an ein angesteuertes elektronisches Modul als Empfänger, z.B. an einen Gebläseregler, wird in Kraftfahrzeugen als Trägersignal häufig ein pulsweitenmoduliertes Signal verwendet, da ein solches Signal unempfindlich für Groundoffsetspannungen zwischen Sender und Empfänger ist.

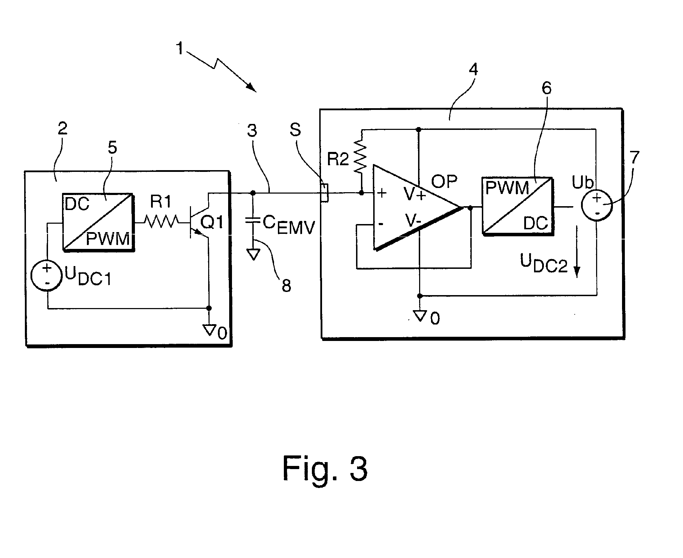

Ein Schaltbild einer Anordnung **1** zur Übertragung eines solchen Signals, wie sie aus dem Stand der Technik bekannt ist, ist in **Fig. 3** gezeigt. Von einer Steuereinrichtung **2** z.B. zur Steuerung einer Klimaanlage als Sender soll eine erste Gleichspannung $U_{DC1}$ über eine Signalleitung **3** an einen Steuereingang **S** eines Gebläsereglers **4** als Empfänger übertragen werden, welcher eine zweite Gleichspannung $U_{DC2}$ zur Regelung eines Gebläsemotors verwendet, die bei idealer Übertragung mit der ersten Gleichspannung $U_{DC1}$ übereinstimmt. Die erste Gleichspannung $U_{DC1}$ wird in der Steuereinrichtung 2 in einem DC/PWM-Umsetzer **5** in ein pulsweitenmoduliertes (PWM) Signal umgewandelt, welches über einen ersten Widerstand **R1** einem BipolarTransistor **Q1** zugeführt wird. Es versteht sich, dass das PWM-Signal alternativ auch direkt von einem Mikrocontroller (nicht gezeigt) erzeugt werden kann.

Das PWM-Signal dient zur Steuerung des Basisstroms des Transistors Q1, welcher als Schalter betrieben wird und dem Puls-Pausen- Verhältnis des PWM-Signals entsprechend ein- und ausschaltet. Der Transistor Q1 wird im sogenannten Open-Kollektor-Modus betrieben, d.h. in einer Emitterschaltung, bei welcher ein zweiter Widerstand **R2** als Kollektorwiderstand nicht in der Steuereinheit 2, sondern im Gebläseregler 4 angeordnet ist. Steuereinheiten mit einer solchen Open-Kollektor-Stufe sind besonders häufig anzutreffen, da sie einfach und kostengünstig realisiert werden können.

Wie schon erwähnt, beinhaltet der Gebläseregler 4 den Kollektorwiderstand R2 als Pull-Up-Widerstand, einen Differenzverstärker **OP**, welcher als Impedanzwandler (Spannungsfolger) für die Spannung am zweiten Widerstand R2 betrieben wird, und der einen PWM/DC-Umsetzer **6** mit einem Tiefpassfilter treibt, welcher das empfangene pulsweitenmodulierte Signal in die zweite Gleichspannung $U_{DC2}$ rückwandelt. Im Gebläseregler **4** ist weiterhin eine Spannungsquelle **7** zur Erzeugung einer konstanten Versorgungsspannung $U_b$ von typischerweise 12 V vorgesehen.

Im Automobilbereich, wo der Kostendruck sehr groß ist, ist die Signalleitung 3 üblicherweise nicht abgeschirmt. Die nicht geschirmte Signalleitung 3 transportiert die Schaltflanken des pulsweitenmodulierten Signals, ist also dU/dt-störbehaftet und kann die elektromagnetische Verträglichkeit (EMV) der Anordnung 1 reduzieren, da die elektrische Feldstärke um die Signalleitung 3 sich sprunghaft bei jeder Schaltflanke ändert. Dies kann zu Störungen an benachbart zur Signalleitung 3 angeordneten Baugruppen führen, an der diese aufgrund des geringen im Automobil zur Verfügung stehenden Bauraumes vorbeigeführt werden muss. Um die Anstiegsgeschwindigkeit der Flanken zu begrenzen, ist ein Kondensator **8** mit einer Kapazität $C_{EMV}$ zur Entstörung der Signalleitung 3 vorgesehen. Die Entstörkapazität $C_{EMV}$ begrenzt die Spannungsänderung dU/dt auf der Signalleitung 3 und senkt die von der Signalleitung 3 abgestrahlte transiente elektrische Feldstärke. Der Kondensator 8 ist hier beispielhaft leitungsmittig in der Signalleitung 3 angeordnet, er kann aber auch in der Steuereinrichtung 2 oder im Gebläseregler 4 integriert sein.

Da der Kondensator 8 durch den Transistor Q1 schneller entladen wird, als er durch den Widerstand R2 geladen wird, kommt es auf der Signalleitung 3 zu unsymmetrischen Signalflankenverzerrungen. Die Signalleitung 3 ändert das Tastverhältnis und somit den Informationsgehalt des pulsweitenmodulierten Signals. Dieser Umstand ist störend, wenn die zweite Gleichspannung $U_{DC2}$ gleich der ersten Gleichspannung $U_{DC1}$ sein soll, was in der Praxis fast immer gefordert wird. Man begegnet diesem Problem, indem man für das pulsweitenmodulierte Signal eine vergleichsweise kleine Frequenz (z.B. 35 Hz) wählt. Wenn die Periodendauer des pulsweitenmodulierten Signals groß im Vergleich zur Flankenanstiegsgeschwindigkeit ist, bleibt der Fehler klein.

Eine geringe Frequenz des pulsweitenmodulierten Signals erzwingt allerdings eine große Integrationszeitkonstante des Tiefpasses im PWM/DC-Umsetzer 6, der Gebläseregler 4 arbeitet daher als Empfänger relativ langsam. Da in der Automobilindustrie neben hoher Qualität und kleinen Ausfallraten auch zuverlässige Produkttests gefordert werden, führt dies zwangsläufig zu hohen Testzeiten und Testkosten, weil sich das träge Verhalten des Gebläseregers 4 hierbei störend bemerkbar macht. So werden am Ende des Produktionsprozesses eine Vielzahl von Funktionen getestet und vor jeder Messung muss gewartet werden, bis sich der Arbeitspunkt des Gebläsereglers 4 stabil eingestellt hat. Bei einem PWM/DC-Umsetzer 6 mit hoher Integrationszeitkonstante führt dies zu langen Testzeiten und damit zu hohen Testkosten.

Der Erfindung liegt die Aufgabe zugrunde, ein elektronisches Modul sowie eine Anordnung zur Übertragung eines bevorzugt pulsweitenmodulierten Signals der eingangs genannten Art derart weiterzubilden, dass die entlang der Signalleitung erzeugten transienten elektrischen Felder reduziert sind, ohne dass es zu einer Verschlechterung der Signalübertragung kommt.

Diese Aufgabe wird erfindungsgemäß durch ein elektronisches Modul gelöst, welches zur Erzeugung eines im Wesentlichen konstanten Potentials an dem Steuereingang ausgebildet ist. Erfindungsgemäß wird vorgeschlagen, an Stelle eines Spannungs-Signals ein Strom-Signal über die Signalleitung zu übertragen. Hierzu wird der Eingang des elektronischen Moduls auf ein konstantes Potential gesetzt, welches auch entlang der Signalleitung besteht, sodass nahezu keine Spannungsänderungen dU/dt des Signals entlang der Leitung mehr auftreten. Hierdurch kann auf das Vorsehen von Kondensatoren zur Verbesserung der EMV verzichtet werden, und somit können auch Signale mit einer höheren Taktrate fehlerfrei übertragen werden.

Bei einer bevorzugten Ausführungsform ist der Steuereingang als stromgesteuerter, niederohmiger Eingang mit einem Eingangswiderstand von bevorzugt 100 Ω oder weniger, insbesondere 10 mΩ oder weniger ausgeführt. Im Gegensatz hierzu ist im Stand der Technik, wie er in Fig. 3 beschrieben ist, der Steuereingang als hochohmiger, spannungsgesteuerter Eingang ausgelegt. Durch den niederohmigen Steuereingang wird das Strom-Signal in das Innere des Gebläsereglers geführt und kann an einem dort vorgesehenen Widerstand in eine Spannung umgewandelt werden.

Bei einer weiteren vorteilhaften Ausführungsform ist eine Spannungserzeugungseinheit zur Erzeugung des konstanten Potentials am Steuereingang vorgesehen. Die Spannungserzeugungseinheit kann hierzu einen Teil der Versorgungsspannung abzweigen, welcher typischerweise deutlich geringer als diese ist und typischerweise bei ca. einem Zehntel der Versorgungsspannung liegt.

Bei einer vorteilhaften Ausführungsform umfasst das elektronische Modul einen Differenzverstärker mit einem Ausgang und zwei Eingängen, von denen der erste mit dem Steuereingang verbunden ist und von denen der zweite ein konstantes Potential aufweist, wobei der Differenzverstärker als Strom-Spannungs-Wandler mit einem Widerstand zwischen dem ersten Eingang und dem Ausgang geschaltet ist. In diesem Fall wird der niederohmige, stromgesteuerte Eingang an einem Strom-Spannungs-Wandler gebildet. Dieser regelt seinen Ausgang stets so, dass an beiden Eingängen gleiche Potentiale anliegen. Das am zweiten Eingang anliegende, konstante Potential liegt somit auch am ersten Eingang an, sodass der Steuereingang und damit die Signalleitung auf konstantem Potential liegen. Gleichzeitig wird am Widerstand das Strom-Signal der Signalleitung in ein um den Betrag des Widerstands verstärktes Spannungssignal umgewandelt.

Bei einer besonders bevorzugten, alternativen Ausführungsform umfasst das elektronische Modul einen in Basis-Schaltung betriebenen Transistor, dessen Basis ein konstantes Potential aufweist und dessen Emitter mit dem Steuereingang in Verbindung steht. In diesem Fall wird ein stromgesteuerter, niederohmiger Eingang dadurch realisiert, dass ein konstantes Potential an die Basis des Transistors angelegt wird, welches um das Basis-Emitter-Potential vermindert am Steuereingang anliegt. Der Transistor im elektronischen Modul bildet zusammen mit dem im Open-Kollektor-Modus betriebenen Transistor in der Steuereinrichtung eine Kaskodenschaltung mit der Besonderheit, dass die Signalleitung die emittergeschaltete erste Stufe der Kaskodenschaltung mit der basisgeschalteten zweiten Stufe der Kaskodenschaltung verbindet. Die Kollektorlast der ersten Stufe wird hierbei durch den geringen Eingangswiderstand der basisgeschalteten Stufe gebildet. Diese Ausführungsform hat den Vorteil, dass das elektronische Modul vollständig mit diskreten Bauteilen aufgebaut und somit auf ICs verzichtet werden kann, welche aufgrund der hohen Anforderungen der Bauteile im Bezug auf die Temperaturstabilität in Automobilen mit hohen Kosten verbunden sind. Es versteht sich, dass an Stelle eines oder beider Bipolar-Transistoren auch FETs vorgesehen sein können, wodurch sich aber die Kosten der Schaltung in der Regel erhöhen.

Bei einer besonders vorteilhaften Ausführungsform weist das elektronische Modul einen PWM/DC-Umsetzer zur Umwandlung des pulsweitenmodulierten Signals in eine Gleichspannung auf. Die hierbei Erzeugte Gleichspannung kann z.B. zur Regelung eines Gebläsemotors verwendet werden, z.B. indem diese als Sollvorgabe für die über dem Gebläsemotor abfallende Spannung dient.

Die Erfindung ist auch realisiert in einer Anordnung zur Übertragung eines bevorzugt pulsweitenmodulierten Signals mit: einer Steuereinrichtung zur Erzeugung des Signals, einer Signalleitung zum Übertragen des Signals und einem elektronischen Modul wie oben beschrieben zum Empfangen des Signals. Die Anordnung ist zur Übertragung eines Strom-Signals ausgelegt, sodass schnelle Spannungsänderungen an der Signalleitung weitestgehend vermieden und so die EM-Verträglichkeit der Anordnung erhöht werden kann.

Bei einer besonders bevorzugten Ausführungsform weist die Steuereinrichtung einen im Open-Collector-Mode, bevorzugt in einer Emitterschaltung betriebenen Transistor zur Erzeugung des Signals auf. Der Transistor wird hierbei als Schalter betrieben, der in Abhängigkeit von einem in der Regel pulsweitenmodulierten Schaltsignal einen Strom über die Signalleitung ein-oder ausschaltet. Der Betrieb in Emitterschaltung hat den Vorteil, dass der im Emitterkreis angeordnete Widerstand als Stromsenke dient und daher dessen Stromaufnahme sehr genau bestimmt ist.

Bei einer weiteren vorteilhaften Ausführungsform weist die Steuereinrichtung eine weitere Umwandlungseinheit zur Umwandlung einer Gleichspannung in das pulsweitenmodulierte Signal auf. Alternativ kann das pulsweitenmodulierte Signal auch direkt in einem Mikrocontroller erzeugt werden.

Ausführungsbeispiele des erfindungsgemäßen elektronischen Moduls und der Anordnung sind in den schematischen Zeichnungen dargestellt und werden in der nachfolgenden Beschreibung erläutert. Es zeigt:

Fig. 1    ein Schaltbild einer ersten Ausführungsform der erfindungsgemäßen Anordnung zur Signalübertragung mit einem Strom-Spannungs-Wandler zur Erzeugung einer konstanten Spannung,

Fig. 2    ein Schaltbild einer zweiten Ausführungsform der erfindungsgemäßen Anordnung mit einer Kaskodenschaltung zur Erzeugung der konstanten Spannung, und

Fig. 3    ein Schaltbild einer Anordnung zur Signalübertragung nach dem Stand der Technik.

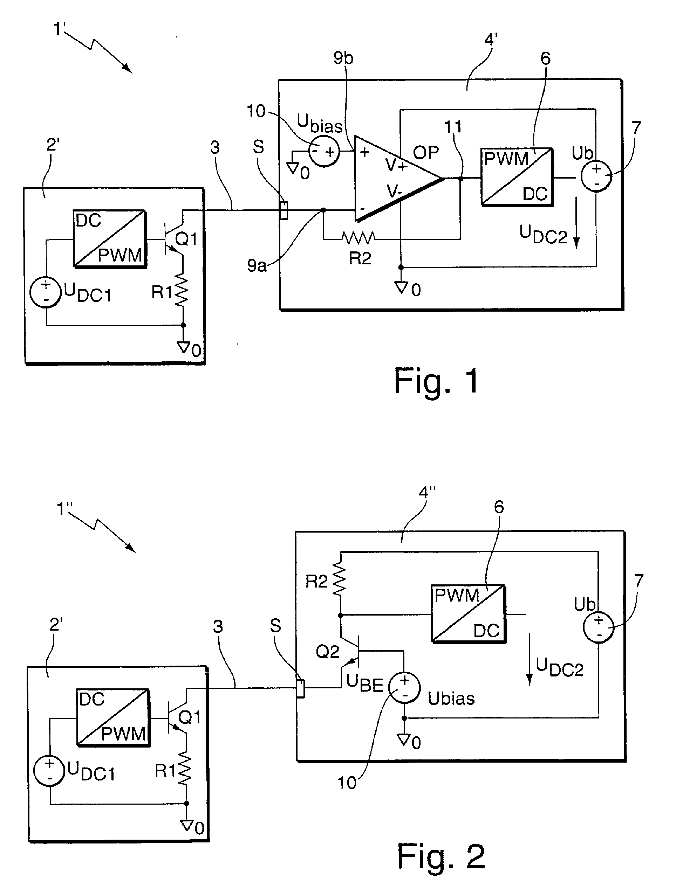

In **Fig. 1** ist eine Anordnung **1'** zur Übertragung eines pulsweitenmodulierten Signals zwischen einer Steuereinrichtung **2'** und einem Gebläseregler **4'** gezeigt, die sich von der oben im Zusammenhang mit Fig. 3 beschriebenen Anordnung 1 zunächst senderseitig dadurch unterscheidet, dass der erste Widerstand R1 im Emitterstromkreis des ersten Transistors Q1 angeordnet ist, d.h. dieser wird in Emitterschaltung betrieben. Ein konstantes Potential **U$_{bias}$** in seinem Kollektorkreis wird hierbei am entgegengesetzten Ende der Signalleitung 3 im Gebläseregler 4' an einem ersten Eingang **9a** des als Strom-Spannungs-Wandler geschalteten Differenzverstärkers OP erzeugt. Zur Erzeugung des konstanten Potentials U$_{bias}$ ist im Gebläseregler 4' eine Spannungserzeugungseinheit **10** vorgesehen, welche mit einem zweiten Eingang **9b** des Differenzverstärkers OP verbunden ist. Der Differenzverstärker OP regelt die Spannung an seinem Ausgang **11** auf eine solche Weise, dass das konstante Potential U$_{bias}$ auch am ersten Eingang 9a anliegt. Durch einen mit dem ersten Eingang 9a und dem Ausgang 11 verbundenen zweiten Widerstand R2 wird ein niederohmiger Eingang des Gebläsereglers 4' realisiert und gleichzeitig eine Umwandlung des über die Signalleitung 3 übertragenen Strom-Signals in ein um den Betrag des zweiten Widerstands R2 verstärktes Spannungssignal realisiert. Die hierbei aus dem Strom-Signal erzeugte Spannung wird am Ausgang 11 des Differenzverstärkers OP dem PWM/DC-Umsetzer 6 zugeführt.

Bei der in Fig. 1 gezeigten Anordnung 1' wird somit im Gegensatz zu Fig. 3 an Stelle eines Spannungs-Signals ein Strom-Signal über die Signalleitung 3 übertragen, sodass keine abrupten Spannungsänderungen in der Signalleitung 3 auftreten und daher keine transienten elektrischen Felder erzeugt werden können, wodurch die elektromagnetische Verträglichkeit der Anordnung 1' bzw. der Signalleitung 3 erhöht wird. Die Übertragung eines Strom-Signals wird durch das Vorsehen eines stromgesteuerten, niederohmigen Steuereingangs S am Gebläseregler 4' ermöglicht. Der Eingangswiderstand R$_E$ des Steuereingangs S kann im mΩ-Bereich liegen und ist gegeben durch

$$R_E = \frac{R2}{A_{OL} + 1},$$

wobei A$_{OL}$ die Schleifenverstärkung des Differenzverstärkers OP bezeichnet. Beispielsweise kann der zweite Widerstand R2 einen Betrag von 1 kΩ haben und die Schleifenverstärkung A$_{OL}$ bei $10^5$ liegen, wodurch sich ein Eingangswiderstand R$_E$ von 10 mΩ ergibt.

Eine alternative Realisierung des niederohmigen, stromgesteuerten Steuereingangs S an einem Gebläseregler **4''** einer Anordnung **1''** zur Signalübertragung ist in **Fig. 2** dargestellt. Während senderseitig die Anordnung 1'' mit der in Fig. 1 gezeigten Anordnung 1' übereinstimmt, ist im Gebläseregler 4'' der Differenzverstärker OP durch einen zweiten Transistor Q2 ersetzt. Der zweite Transistor Q2 wird in einer Basisschaltung betrieben und dessen Basis steht mit der Spannungserzeugungseinheit 10 in Verbindung, sodass an der Basis das konstante Potential U$_{bias}$ anliegt. Am Emitter des zweiten Transistors Q2 liegt daher ein um den Betrag der Basis-Emitter-Spannung **U$_{BE}$** reduziertes, im Wesentlichen konstantes Potential an. Der erste Transistor Q1 der Steuereinheit 2' und der zweite Transistor Q2 des Gebläsereglers 4'' bilden hierbei eine Kaskodenschaltung, deren beiden Stufen über die Signalleitung 3 in Verbindung stehen. Am Emitter des zweiten Transistors Q2 wird hierdurch ein niederohmiger, stromgesteuerter Steuereingang S gebildet, wie dies zur Übertragung eines Strom-Signals erforderlich ist. Im Gegensatz zum in Fig. 1 gezeigten Gebläseregler 4' kann der Gebläseregler 4'' von Fig. 2 mit einer geringen Zahl diskreter Bauteile aufgebaut werden, sodass diese Lösung besonders kostengünstig ist.

Die zur Regelung des Gebläsemotors in Abhängigkeit von der zweiten Gleichspannung U$_{DC2}$ verwendeten Bauteile der Gebläseregler 4', 4'' sind in Fig. 1 und Fig. 2 nicht im Einzelnen dargestellt, da diese aus dem Stand der Technik hinlänglich bekannt sind. Insbesondere können die weiteren Bauteile der Gebläseregler 4', 4'' als analoge Regelschaltung, z.B. wie in der DE 10 2004 018 169 A1 der Anmelderin beschrieben, oder als digitale Regelschaltung realisiert sein, wobei in letzterem Fall typischer Weise ein nicht pulsweitenmoduliertes Binärsignal über die Signalleitung übertragen wird.

In beiden oben beschriebenen Beispielen erzeugt die Signalleitung 3 keine transienten elektrischen Felder und erhöht so die elektromagnetische Veträglichkeit der Anordnungen 1', 1''. Weiterhin kann auf Entstörkondensatoren an der Signalleitung verzichtet werden, sodass auch bei höherfrequenten pulsweitenmodulierten Signalen die Signalflanken mit hoher Genauigkeit übertragen werden können. Dadurch kann der PWM/DC-Umsetzer im Gebläseregler 4', 4'' mit einer kleineren Zeitkonstante betrieben werden und die Testzeiten und damit die Kosten für den Test des Gebläsereglers 4', 4'' verringern sich. Weiterhin kann bei geeigneter Schaltungsdimensionierung der Steuereinrichtung 2' vermieden werden, dass die Kollektor-Basis-Spannung des ersten Transistors Q1 negativ wird, wie es in der Steuereinrichtung 2 von Fig. 3 beim schaltendem ersten Transistor Q1 normalerweise der Fall ist, sodass der erste Transistor Q1 in der Steuereinrichtung 2' immer im Normalbetrieb und somit verzögerungsarm arbeitet.

Es versteht sich, dass das oben beschriebene Konzept der Signalübertragung nicht nur bei pulsweitenmodulierten Signalen durchgeführt werden kann, sondern auch bei anderen Signalen, bei denen steile Signalflanken auftreten, insbesondere auch zur Übertragung binärer Signale, falls der Gebläseregler zur Verarbeitung binärer Signale ausgelegt ist. Ebenso kann dieses Konzept nicht nur bei einem Gebläseregler, sondern auch bei jedem anderen elektronischen Modul, dem ein Steuersignal über eine Signalleitung zugeführt werden soll, vorteilhaft eingesetzt werden, um die elektromagnetische Verträglichkeit zu steigern.

**Patentansprüche**

1. Ein elektronisches Modul für ein Kraftfahrzeug, insbesondere ein Gebläseregler (4', 4"), mit einem Steuereingang (S) für ein über eine Signalleitung (3) übertragenes, insbesondere pulsweitenmoduliertes Signal, **dadurch gekennzeichnet, dass**

   das elektronische Modul zur Erzeugung eines im Wesentlichen konstanten Potentials ($U_{bias}$, $U_{bias}$ - $U_{BE}$) an dem Steuereingang (S) ausgebildet ist.

2. Elektronisches Modul nach Anspruch 1, bei dem der Steuereingang (S) als stromgesteuerter, niederohmiger Eingang mit einem Eingangswiderstand von bevorzugt 100 $\Omega$ oder weniger, insbesondere 10 m$\Omega$ oder weniger ausgeführt ist.

3. Elektronisches Modul nach Anspruch 1 oder 2, bei dem eine Spannungserzeugungseinheit (10) zur Erzeugung des konstanten Potentials ($U_{bias}$) am Steuereingang (S) vorgesehen ist.

4. Elektronisches Modul nach einem der vorhergehenden Ansprüche, welches einen Differenzverstärker (OP) mit einem Ausgang (11) und zwei Eingängen (9a, 9b) umfasst, von denen der erste mit dem Steuereingang (S) verbunden ist und von denen der zweite ein konstantes Potential ($U_{bias}$) aufweist, wobei der Differenzverstärker (OP) als Strom-Spannungs-Wandler mit einem Widerstand (R2) zwischen dem ersten Eingang (9a) und dem Ausgang (11) geschaltet ist.

5. Elektronisches Modul nach einem der Ansprüche 1 bis 3, welches einen in Basis-Schaltung betriebenen Transistor (Q2) umfasst, dessen Basis ein konstantes Potential ($U_{bias}$) aufweist und dessen Emitter mit dem Steuereingang (S) in Verbindung steht.

6. Elektronisches Modul nach einem der vorhergehenden Ansprüche, welches einen PWM/DC-Umsetzer (6) zur Umwandlung des pulsweitenmodulierten Signals in eine Gleichspannung ($U_{DC2}$) aufweist.

7. Anordnung (1', 1") zur Übertragung eines bevorzugt pulsweitenmodulierten Signals mit: einer Steuereinrichtung (2') zur Erzeugung des Signals, einer Signalleitung (3) zum Übertragen des Signals und einem elektronischen Modul (4', 4") nach einem der vorhergehenden Ansprüche zum Empfangen des Signals.

8. Anordnung nach Anspruch 7, bei dem die Steuereinrichtung (2') einen im Open-Collector-Mode, bevorzugt in einer Emitterschaltung betriebenen Transistor (Q1) zur Erzeugung des Signals aufweist.

9. Anordnung nach Anspruch 7 oder 8, bei der die Steuereinrichtung (2') einen DC/PWM-Umsetzer (5) zur Umwandlung einer Gleichspannung ($U_{DC1}$) in das pulsweitenmodulierte Signal aufweist.

Fig. 1

Fig. 2

Fig. 3

| | Europäisches Patentamt | EUROPÄISCHER RECHERCHENBERICHT | Nummer der Anmeldung EP 08 01 0093 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 033 585 A (DAIMLER CHRYSLER AG [DE]) 6. September 2000 (2000-09-06) * Absätze [0033] - [0037]; Abbildungen 1-6 * | 1-9 | INV. G05F1/46 G05F3/20 G11C5/14 |
| X | DE 299 09 900 U1 (MOELLER GMBH [DE]) 30. September 1999 (1999-09-30) * Zusammenfassung; Abbildung 1 * | 1-9 | |
| X | WO 99/39427 A (KONINKL PHILIPS ELECTRONICS NV [NL]; PHILIPS SVENSKA AB [SE]) 5. August 1999 (1999-08-05) * Seite 1, Zeile 1 - Seite 1, Zeile 29 * * Seite 5, Zeile 1 - Seite 5, Zeile 18; Abbildungen 1,2 * | 1-9 | |
| X | US 4 367 522 A (FORSTBAUER WILHELM [DE] ET AL) 4. Januar 1983 (1983-01-04) * Spalte 5, Zeile 21 - Spalte 6, Zeile 5; Abbildungen 3,4 * | 1-9 | |
| X | DE 102 20 577 C1 (INFINEON TECHNOLOGIES AG [DE]) 25. September 2003 (2003-09-25) * Absatz [0016]; Abbildungen 1-3 * | 1-9 | RECHERCHIERTE SACHGEBIETE (IPC) G05F G11C |
| A | US 2004/173013 A1 (KOBAYASHI MITSUYUKI [JP] ET AL) 9. September 2004 (2004-09-09) * Absatz [0086]; Abbildung 2 * | 1-9 | |
| A | DE 101 00 497 A1 (HEWLETT PACKARD COMPANY N D GE [US] HEWLETT PACKARD DEVELOPMENT CO [US]) 9. August 2001 (2001-08-09) * Anspruch 15; Abbildungen 1,2 * | 1-9 | |
| A | US 2006/057980 A1 (HAQUE TANBIR [US] ET AL) 16. März 2006 (2006-03-16) * Ansprüche 1-3,14; Abbildung 3 * | 1-9 | |

Der vorliegende Recherchenbericht wurde für alle Patentansprüche erstellt

| Recherchenort | Abschlußdatum der Recherche | Prüfer |
|---|---|---|
| München | 30. September 2008 | Hernandez Serna, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 0093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 1033585 | A | 06-09-2000 | DE | 19909140 A1 | 21-09-2000 |
| | | | JP | 3392385 B2 | 31-03-2003 |
| | | | JP | 2000275328 A | 06-10-2000 |
| | | | US | 6346878 B1 | 12-02-2002 |
| DE 29909900 | U1 | 30-09-1999 | KEINE | | |
| WO 9939427 | A | 05-08-1999 | CN | 1256022 A | 07-06-2000 |
| | | | JP | 2002510460 T | 02-04-2002 |
| | | | US | 6044002 A | 28-03-2000 |
| US 4367522 | A | 04-01-1983 | EP | 0037001 A1 | 07-10-1981 |
| DE 10220577 | C1 | 25-09-2003 | US | 2004017225 A1 | 29-01-2004 |
| US 2004173013 | A1 | 09-09-2004 | CN | 1526938 A | 08-09-2004 |
| | | | DE | 102004010343 A1 | 14-10-2004 |
| | | | JP | 2004263676 A | 24-09-2004 |
| DE 10100497 | A1 | 09-08-2001 | US | 6433605 B1 | 13-08-2002 |
| US 2006057980 | A1 | 16-03-2006 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102004018169 A1